# EUROPÄISCHE PATENTANMELDUNG

(11) **EP 0 650 239 A1**
(43) Veröffentlichungstag der Anmeldung: **26.04.1995**
(21) Anmeldenummer: 94116145.7
(22) Anmeldetag: 13.10.1994
(51) Int. Cl.: H02G 15/013, G02B 6/44

(54) **Muffe zur Aufnahme von Abzweig- oder Verbindungsstellen von optischen oder elektrischen Kabeln**

(30) Priorität: 22.10.1993 DE 9316172 U
(71) Anmelder: Kabelmetal Electro GmbH, D-30179 Hannover (DE)
(72) Erfinder: Grajewski, Franz, Dr.-Ing., D-31655 Stadthagen (DE); Freckmann, Hans-Holger, D-30855 Langenhagen (DE); Stieb, Werner, Dipl.-Ing., D-31655 Stadthagen (DE); Wielgolaski, Zbigniew, Dipl.-Ing., D-31655 Stadthagen (DE); Schöttker, Reinhard, D-31714 Lauenhagen (DE)

(57) **Zusammenfassung**

Es wird eine Muffe zur Aufnahme von Abzweig- oder Verbindungsstellen von optischen oder elektrischen Kabeln beschrieben, die aus einem die Abzweig- oder Verbindungsstellen aufnehmenden im wesentlichen zylindrischen stabilen Hohlkörper (8) mit zumindest einem offenen Ende besteht, bei welchem in das bzw. die offenen Enden jeweils ein Muffenkopf (1) eingesetzt ist und der bzw. die Muffenköpfe (1) Durchgangsöffnungen (2) für die ein- bzw. austretenden Kabel (3,4) in Form von radialen Schlitzen (2) aufweisen. In den Schlitzen (2) sind aufklappbare Dichtkörper (11) vorgesehen, welche die ein- bzw. austretenden Kabel (3,4) umfassen und dichtend in die Schlitze (2) eingefügt sind.

## Beschreibung

Die Erfindung betrifft eine Muffe zur Aufnahme von Abzweig- oder Verbindungsstellen von optischen oder elektrischen Kabeln nach dem Oberbegriff des Anspruchs 1.

Aus der DE-OS 40 39 242 ist eine Muffe für eine Abzweig- oder Verbindungsstelle von Kabeln bekannt, die aus einer die Abzweig- oder Verbindungsstelle umgebenden Hülse sowie die Hülse endseitig abdichtenden Stirnkörpern besteht. Die Stirnkörper weisen Durchgangsöffnungen in Form von radialen Schlitzen für die Kabel auf, so daß die Muffe in einfacher Weise für ungeschnittene und geschnittene Kabel gleichermaßen eingesetzt werden kann. Die Stirnkörper und die Hülse sind von einem Schrumpfschlauch bzw. einer Schrumpfmanschette umgeben, welche auf die ein- und austretenden Kabel aufgeschrumpft ist. Zwischen zwei Kabeln ist der Schrumpfschlauch durch eine Klammer endseitig abgedichtet.

Aus der DE-GM 92 17 709 ist eine Haubenmuffe bekannt, die aus einem Fußteil und einem das Fußteil übergreifenden Haubenteil besteht. Für die Einführung des Kabels sind auch hier radiale Einschnitte im Fußteil vorgesehen. Der Trennbereich zwischen Haubenteil und Fußteil ist von einem Schrumpfschlauch oder einer Schrumpfmanschette abgedichtet. Durch eine endseitig aufgesetzte Klammer ist der Schrumpfschlauch zwischen zwei Kabeln abgedichtet.

Beiden Lösungen ist gemeinsam, daß zur Abdichtung ein Schrumpfschlauch bzw. eine Schrumpfmanschette verwendet wird, die durch Aufbringen von Wärme auf die Muffe aufgeschrumpft werden. Die Abdichtung erfolgt dabei durch eine an der inneren Oberfläche des Schrumpfschlauches befindlichen Heißschmelzkleberschicht. Diese Kleberschicht erschwert ein Wiederöffnen der Muffe. Darüberhinaus ist vielfach die Verwendung von Wärme z.B. durch offene Flammen oder durch ein Heißluftgebläse unerwünscht bzw. unmöglich.

Der vorliegenden Erfindung liegt von daher die Aufgabe zugrunde, eine Muffe anzugeben, die schnell und sicher ohne Verwendung von Spezialwerkzeugen, wie Bohrer, Bohrgeräte, Injektionsvorrichtungen für Abdichtmassen, Schrumpfbrenner etc. montiert werden kann und jederzeit ohne Schwierigkeiten wieder geöffnet werden kann.

Diese Aufgabe wird durch das im Kennzeichen des Anspruchs 1 Erfaßte gelöst.

Neben den sich aus der Aufgabenstellung direkt ergebenden Vorteilen weist die Erfindung noch den Vorteil auf, daß keine Fachleute für die Montage der Muffe erforderlich sind, vielmehr ist die Muffe von jedem Monteur nach kurzer Einweisung fachgerecht zu montieren.

Weitere Vorteile der Erfindung sind in den Unteransprüchen erfaßt.

Die Erfindung ist anwendbar auf Haubenmuffen, bei welchen nur ein Muffenkopf vorgesehen ist und ein Hohlkörper mit nur einem offenen Ende eingesetzt wird, sowie auf Durchgangsmuffen mit einem an beiden Enden offenen Hülsrohr und zwei Muffenköpfen. Bei einer Durchgangsmuffe besteht das Hülsrohr zweckmäßigerweise aus zwei Halbschalen, die durch Spannkeile zu dem Hülsrohr zusammengefügt sind.

Dadurch, daß jedes Kabel unabhängig von anderen Kabeln im Muffenkopf eingesetzt und abgedichtet ist, wird beim Wiederöffnen nur das betroffene Kabel am Muffenkopf entnommen. Dichtzone und Kabelabfangung sind voneinander getrennt. Die Kabelabfangung erfolgt innen und außen am Muffenkopf, so daß die Dichtzone am Kabel von mechanischen Beanspruchungen frei bleibt.

Die Erfindung ist anhand der in den Figuren 1 bis 5 schematisch dargestellten Ausführungsbeispiele näher erläutert.

Es zeigen
- Figur 1: eine seitliche Ansicht - zum Teil im Schnitt - des Ein- bzw. Austrittsbereichs einer Muffe
- Figur 2: eine Draufsicht auf den Ein- bzw. Austrittsbereich von der Stirnseite
- Figur 3: einen Ausschnitt aus dem Muffenkopf
- Figur 4: eine Ansicht eines Dichtkörpers
- Figur 5: eine Ansicht eines Dichtbandes.

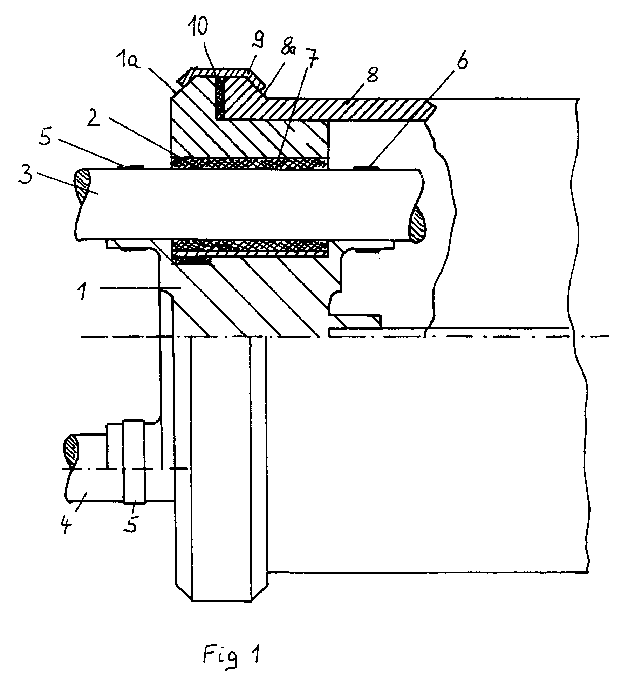

In der Figur 1 ist mit 1 der Muffenkopf bezeichnet, der als Kunststoffspritzgußteil ausgestaltet ist. Der Muffenkopf 1 weist diverse Durchgänge 2 auf, durch welche Kabel 3 und 4 in das Muffeninnere eintreten. Die Kabel 3 und 4 sind durch sog. Kabelbinder 5 und 6 an dem Muffenkopf 1 abgefangen. Die Durchgänge 2 sind mittels Dichtungen 7 gegen Eindringen von Feuchtigkeit abgedichtet. Das Muffeninnere ist im Falle einer Verbindungsmuffe durch ein Muffenrohr und im Falle einer Haubenmuffe durch eine Haube 8 nach außen abgeschirmt. Das Muffenrohr 8 besteht aus zwei Halbschalen, die gegeneinander abgedichtet sind.

Der Muffenkopf 1 sowie die Haube bzw. das Muffenrohr 8 weisen schräge Ebenen 1a und 8a auf, über die ein Spannring 9 greift und Muffenkopf 1 und Haube bzw. Muffenrohr 8 miteinander verspannt. Ein Dichtring 10 sorgt für eine sichere Abdichtung.

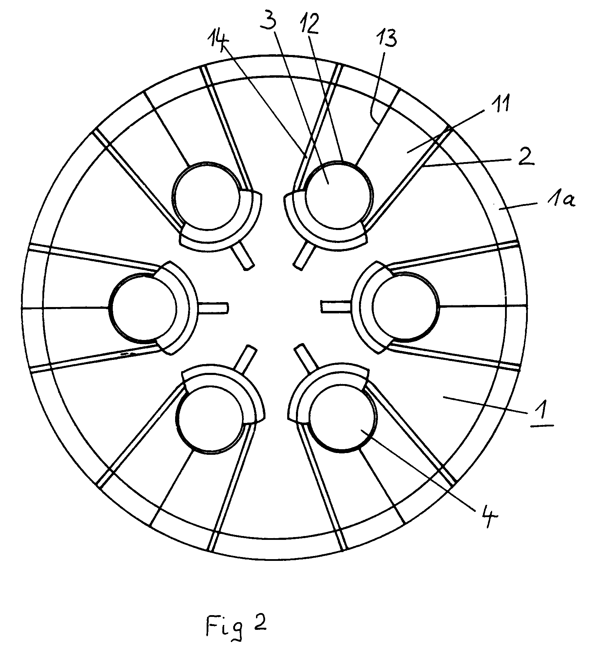

Wie aus Figur 2 deutlicher ersichtlich - diese zeigt eine Ansicht des Muffenkopfes 1 - sind die Durchgänge 2 durch radiale Schlitze im Muffenkopf 1 gebildet. In die Schlitze 2 sind Dichtkörper 11 eingesetzt, welche die Kabel 3 bzw. 4 umfassen. Zu diesem Zweck weisen die Dichtkörper 11 einen sich von der Aufnahmebohrung 12 für die Kabel 3 bzw. 4 bis zum Umfang erstreckenden Schlitz 13 auf. Die Dichtkörper 11 sind als Verbundelemente aus einer mechanisch festen Schale und einem aus elastomerem Material bestehenden Kern ausgebildet. Zwischen den Durchgängen 2 und den Dichtkörpern 11 sind noch Dichtungen 14 vorgesehen.

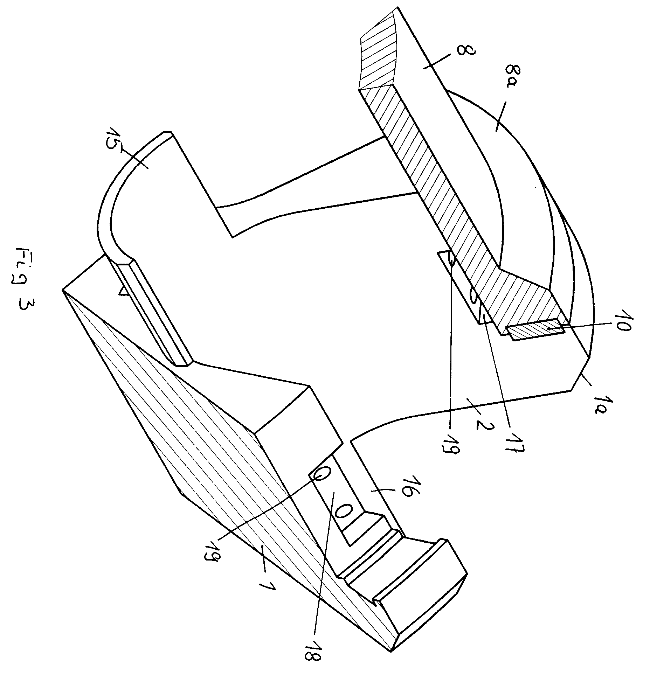

Die Figur 3 zeigt einen Ausschnitt aus dem Muffenkopf 1 in perspektivischer Ansicht. Am Boden der Durchgänge 2 erstrecken sich in beide Richtungen zwei Ansätze 15 und 16, welche zur Abfangung der Kabel 3 und 4 mittels der in Figur 1 dargestellten Kabelbinder 5 und 6 vorgesehen sind. Außerdem zeigt Figur 3 Einschnitte 17 und 18 im Bereich der Umfangsfläche beiderseits der Durchgänge 2. Mittels der Einschnitte 17 und 18 und der am Boden der Einschnitte 17 und 18 vorgesehenen Gewindebohrungen 19 werden die Dichtkörper 11 in den Durchgängen befestigt.

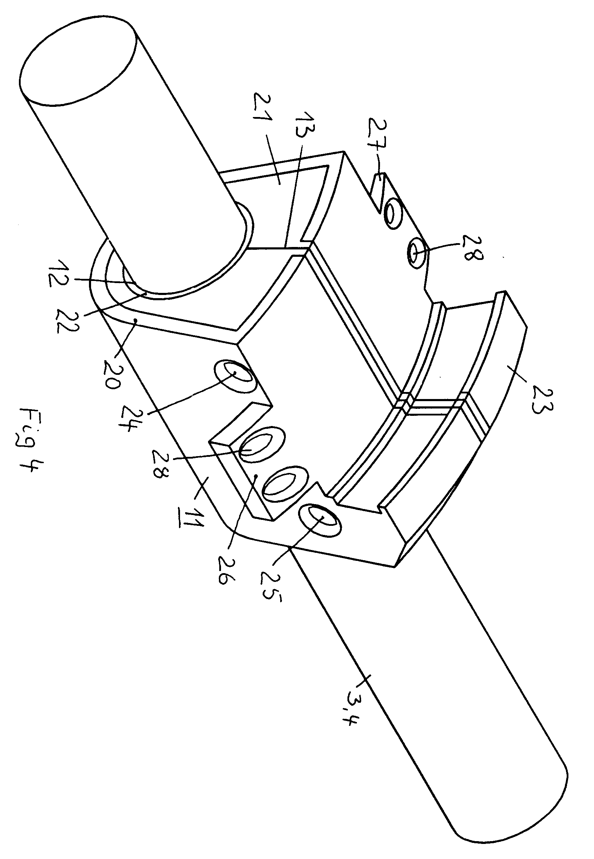

Figur 4 zeigt einen Dichtkörper 11, der auf ein Kabel 3 aufgesteckt ist. Der Dichtkörper 11 besteht aus einer äußeren Schale 20 aus einem thermoplastischen Kunststoff. Im Innern der Schale 20 befindet sich eine Schicht 21 aus einem an der Schale 20 angespritzten elastomeren Werkstoff. Mit 12 ist die Aufnahmebohrung für das Kabel 3 bezeichnet. Wenn der Durchmesser des in die Muffe einzuführenden Kabels 3 gleich oder kleiner ist als der Durchmesser der Aufnahmebohrung 12, ist es erforderlich, das Kabel 3 "aufzupolstern". Dies wird durch ein dauerelastisches selbstverschweißendes Mastixband 22 erreicht. Damit ein Aufklappen des Dichtungskörpers 11 und damit eine Montage am Kabel 3 leicht möglich ist, sind die Wanddicken von Schale 20 und Elastomerschicht 21 am untersten Punkt, d.h. dort wo der Dichtkörper 11 auf dem Boden des Durchgangs 2 aufsitzt entsprechend ausgelegt. Der äußere Rand 23 entspricht in seinem Querschnitt und seiner Krümmung dem äußeren Rand des Muffenkopfes 1. Der Dichtkörper 11 besitzt zwei Durchgangsbohrungen 24 und 25, welche sich durch beide Wände der Schale 20 und durch den Elastomerkörper erstrecken. An einer Seite sind die Durchgangsbohrungen 24 und 25 mit einem Gewinde versehen, so daß der Dichtkörper 11 mittels nicht dargestellter Schraubbolzen auf dem Kabel 3 fest verschraubt werden kann, und alle Dichtflächen innerhalb des Dichtkörpers 11 verpreßt werden.

Der Dichtkörper 11 besitzt noch zwei Ansätze 26 und 27, deren Abmessungen so ausgelegt sind, daß sie in die Einschnitte 17 und 18 passen und ihre Bohrungen 28 mit den Bohrungen 19 fluchten. Der auf das Kabel 3 aufgepreßte Dichtkörper 11 wird in den Durchgang 2 im Muffenkopf 1 eingelegt und mittels nicht dargestellter in die Bohrungen 28 und 19 eingeführter Schraubbolzen im Durchgang 2 festgelegt.

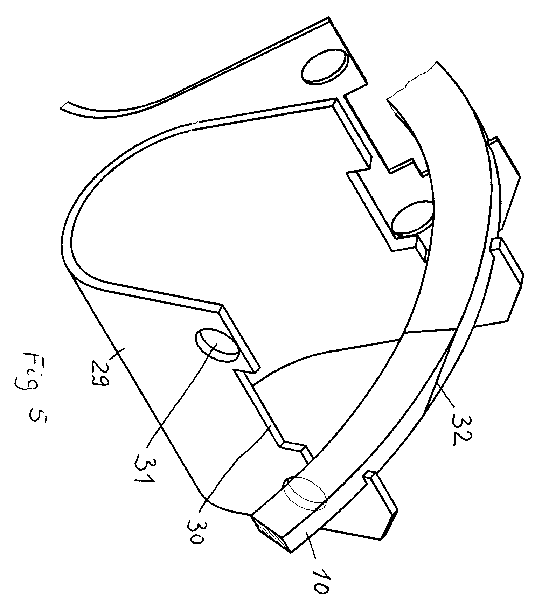

Die Figur 5 zeigt ein Dichtelement, welches zur Abdichtung des Dichtkörpers 11 im Durchgang 2 des Muffenkopfes 1 sowie zwischen Muffenkopf 1 und Haube bzw. Muffenrohr 8 dient. Das Dichtelement besteht aus einem Flachring 10 sowie mehreren der Anzahl der Durchgänge 2 entsprechenden Dichtungen 29. Die Ausnehmungen 30 sowie die Bohrungen 31 in den Dichtungen 29 entsprechen bezüglich ihrer Lage und Abmessungen den Ansätzen 26 und 27 bzw. den Bohrungen 24 und 25. Der Flachring 10 sowie die Dichtungen 29 bilden ein Teil, wobei der Flachring 10 jeweils über dem Dichtkörper 11 getrennt ist (s. 32). Dies ist erforderlich, um die Kabel 3 in die Dichtkörper 11 einlegen zu können. Der Schnitt 32 ist schräg verlaufend, um eine gute Abdichtung an der Schnittstelle zu gewährleisten.

Die Montage der Muffe nach der Lehre der Erfindung soll nun am Beispiel einer Haubenmuffe erläutert werden.

Als erstes werden auf die in die Muffe eingeführten und aus dieser herausgeführten Kabel 3 bzw. 4 die Dichtkörper 11 aufgesetzt und verschraubt (s. Figur 4). Sodann wird das Dichtelement an dem Muffenkopf 1 positioniert, wobei die Dichtungen 29 in den Durchgängen 2 zu liegen kommen. Anschließend werden die Dichtkörper 11 mit den Kabeln 3 bzw. 4 in die Durchgänge 2 eingefügt und mittels der nicht dargestellten in die Bohrungen 19 eingeschraubten Schraubbolzen in diesen befestigt. Dabei wird der Dichtkörper 11 gegenüber dem Durchgang 2 abgedichtet. Die Kabel 3 und 4 werden dann mittels der Kabelverbinder 5 und 6 an den Ansätzen 15 und 16 befestigt. Nachdem alle Dichtkörper 11 eingesetzt und alle Kabel 3 und 4 befestigt sind, wird die Haube 8 aufgesteckt und mittels des Spannringes 9 mit dem Muffenkopf 1 lösbar verspannt.

Die Muffe nach der Lehre der Erfindung ermöglicht ein leichtes und sicheres Wiederöffnen, wobei im Falle einer Montage nur das betroffene Kabel am Muffenkopf 1 entnommen werden muß.

Ein weiterer wesentlicher Vorteil ist darin zu sehen, daß die gleichen Elemente sowohl für Haubenmuffen als auch für Durchgangsmuffen verwendet werden können, wobei im Prinzip gleiche Montageabläufe gewährleistet sind.

## Patentansprüche

1. Muffe zur Aufnahme von Abzweig- oder Verbindungsstellen von optischen oder elektrischen Kabeln, bestehend aus einem die Abzweig- oder Verbindungsstellen aufnehmenden im wesentlichen zylindrischen stabilen Hohlkörper (8) mit zumindest einem offenen Ende, bei welchem in das bzw. die offenen Enden jeweils ein Muffenkopf (1) eingesetzt ist und der bzw. die Muffenköpfe (1) Durchgangsöffnungen (2) für die ein- bzw. austretenden Kabel (3,4) in Form von radialen Schlitzen (2) aufweisen, dadurch gekennzeichnet, daß in den Schlitzen (2) aufklappbare Dichtkörper (11) vorgesehen sind, welche die ein- bzw. austretenden Kabel (3,4) umfassen und dichtend in die Schlitze (2) eingefügt sind.

2. Muffe nach Anspruch 1, dadurch gekennzeichnet, daß die Dichtkörper (11) aus einer Schale (20) aus einem thermoplastischen Kunststoff und einer mit die Schale (20) dauerhaft verbundenen Elastomerschicht (21) bestehen, wobei die Elastomerschicht (21) eine Längsbohrung (12) für das Kabel (3,4) aufweist und daß die Schale (20) und die Elastomerschicht (21) derart geschlitzt sind (13), daß der Dichtkörper (11) zwecks Aufnahme des Kabels (3,4) aufklappbar ist.

3. Muffe nach Anspruch 1 oder 2, dadurch gekennzeichnet, daß die Dichtkörper (11) auf die Kabel (3,4) aufspannbar sind.

4. Muffe nach einem der Ansprüche 1 bis 3, dadurch gekennzeichnet, daß zwischen jedem Dichtkörper (11) und dem Muffenkopf (1) im Bereich der radialen Schlitze (2) eine elastische bandförmige Dichtung (29) vorgesehen ist.

5. Muffe nach einem der Ansprüche 1 bis 4, dadurch gekennzeichnet, daß die Dichtkörper (11) in den radialen Schlitzen (2) mechanisch befestigt sind.

6. Muffe nach einem der Ansprüche 1 bis 5, dadurch gekennzeichnet, daß die radialen Schlitze (2) und die Dichtkörper (11) einen im wesentlichen V-förmigen Querschnitt aufweisen.

7. Muffe nach einem der Ansprüche 1 bis 6, dadurch gekennzeichnet, daß sich an die radialen Schlitze (2) in Längsrichtung der Muffe nach beiden Seiten schalenförmige Ansätze (15,16) zur Abfangung der Kabel (3,4) anschließen.

8. Muffe nach einem der Ansprüche 1 bis 7, dadurch gekennzeichnet, daß der Muffenkopf (1) und die Dichtkörper (11) sich an ihrer Umfangsrichtung flanschartig erweitern und mit einer am Ende des Hohlkörpers (8) befindlichen flanschartigen Erweiterung mittels eines Spannringes (9) verspannt sind.

9. Muffe nach Anspruch 8, dadurch gekennzeichnet, daß der Spannring (9) mit einem Klappmechanismus versehen ist.

10. Muffe nach Anspruch 8 oder 9, dadurch gekennzeichnet, daß die flanschartigen Erweiterungen von Muffenkopf (1) und Hohlkörper (8) schräge Ebenen (1a,8a) aufweisen, die der Spannring (9) übergreift.

11. Muffe nach einem der Ansprüche 8 bis 10, dadurch gekennzeichnet, daß in den sich gegenüberliegenden Stirnflächen von Muffenkopf (1) und Hohlkörper (8) sowie Dichtkörper (11) und Hohlkörper (8) jeweils eine Nut befindlich ist, in welcher eine Ringdichtung (10) angeordnet ist.

12. Muffe nach einem der Ansprüche 1 bis 11, dadurch gekennzeichnet, daß die Ringdichtung (10) und die einzelnen Banddichtungen (29) als ein Teil aufgestaltet sind und daß die Ringdichtung (10) im Bereich der radialen Schlitze (2) jeweils mittels eines Schrägschnittes (32) getrennt ist.
